# EUROPEAN PATENT APPLICATION

(11) **EP 0 633 518 A1**
(43) Date of publication of application: **11.01.1995**
(21) Application number: 93401358.2
(22) Date of filing: 27.05.1993
(51) Int. Cl.: G06F 1/32

(54) **Circuit for generating modular clocking signals**

(71) Applicant: PICOPOWER TECHNOLOGY INC., San Jose, California 95131 (US)
(72) Inventor: Lee, Robert H. J., Palo Alto, California, 94303 (US); Kenny, John D., Sunnyvale, California 94086 (US)
(74) Representative: Habasque, Etienne Joel Jean-François

(57) **Abstract**

A clock signal circuit provides a clock signal to one or more portions of an electronic system selectively disabling the clock signal from being provided to selected portions of the electronic system during times when those portions are not being used thereby to effectively reduce the power consumed by the electronic system.

## Description

### Field of the Invention

This invention relates to clocking circuitry for driving logic circuits and in particular to clocking circuitry capable of selectively driving one or more portions of a logic circuit by leaving the remaining portions of the logic circuit quiescent.

### Background of the Invention

In many high performance logic systems such as systems employing microprocessors, one system clock is used to drive all portions of the system to provide clock synchronization. In many applications, not all portions of the systems or circuit therein are used at the same time and thus need to be clocked. By clocking all portions of the circuits or system, and particularly those portions of the circuits or system which do not need to be used, considerable power is wasted. For example, in applications such as a notebook computer using a battery, battery life is extended by preventing unnecessary power consumption.

### Summary of the Invention

In accordance with this invention, a clocking circuit is provided wherein clock signals are transmitted only to those portions of a system or circuit which are required to be clocked at any given time. Further, in accordance with this invention, the modular clocking circuitry synchronizes the clocking signal provided to each portion of the circuit or subsystem to ensure synchronized operation of the logic circuitry and system free of glitches or other problems of a similar nature. This invention will be more fully understood in conjunction with the following detailed description taken together with the attached drawings.

### Description of the Drawings

Figure 1 shows a block diagram of one embodiment of this invention.

Figure 2 shows the waveforms generated using the circuitry of Figure 1.

Figure 3 shows a system utilizing a plurality of modular clocks of this invention.

### Detailed Description

While one embodiment of this invention will be described, other embodiments of this invention will be obvious in view of this one embodiment.

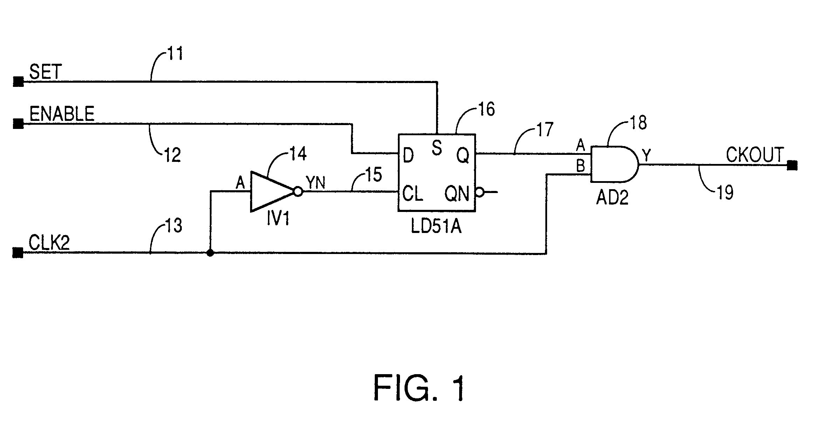

Figure 1 is a schematic block diagram of one embodiment of this invention. In Figure 1, a flip-flop 16 has attached to its D input terminal an input lead 12 upon which is transmitted an ENABLE signal. The CL input to flip-flop 16 is attached to input lead 15 which is also the output lead from an inverter 14, the input of which is connected to clock terminal 13. Clock signal CLK2 is transmitted to the clocking circuit on terminal 13.

Signal SET is transmitted on lead 11 to the set input S of flip-flop 16. When signal SET is high, the signal on output lead 17 connected to the Q output terminal flip-flop 16 is high regardless of the state of ENABLE on input lead 12. Output terminal 17 is connected to the A input terminal of AND input gate 18. The B input terminal of AND gate 18 is connected to input lead 13 upon which clock signal CLK2 is transmitted to the circuitry. Accordingly, when the output signal on lead 17 is high in response to the signal SET on lead 11 being high, AND gate 18 transmits the signal CLK2 to output lead 19 and from there as signal CKOUT to the logic circuitry or microprocessor being driving by the clock signal.

When ENABLE signal on lead 12 is low, then the output signal on lead 17 becomes low and AND gate 18 does not transmit the signal CLK2 on lead 13 to output lead 19. The ENABLE signal going low can only control the state of the flip-flop 16 when the SET signal is low.

Note that if desired, input terminal 11 can be eliminated and the SET signal can be eliminated. Then the state of the ENABLE on lead 12 controls the level of the signal on output lead 17 from flip-flop 16 and thus whether or not AND gate 18 transmits the clock signal CLK2 on input lead 13 to become the output signal CKOUT on output lead 19. However, the use of the SET signal on lead 11 is useful to allow the ENABLE signal on lead 12 to be disabled.

The circuitry of Figure 1 is particularly useful to provide a clock signal CKOUT to one or more portions of a logic circuitry or microprocessor or logic system. Note that the use of the ENABLE signal then allows the user to control the times during which that portion of the logic circuitry or microprocessor systems receives the clock signal CKOUT. By properly controlling the ENABLE signal on lead 12, the power consumed by that portion of the circuitry or the microprocessor system can be controlled. For example, the user can turn off the clock signal to all modules except a DRAM which is required to be refreshed or alternatively can turn off selected portions of the circuitry. Naturally, the circuitry shown in Figure 1 can be replicated as many times as required in the system to allow each portion of the system to be independently clocked. However, the clock signal CLK2 will be derived from a common source for all such circuits thus ensuring synchronization of the clock signal throughout the circuit.

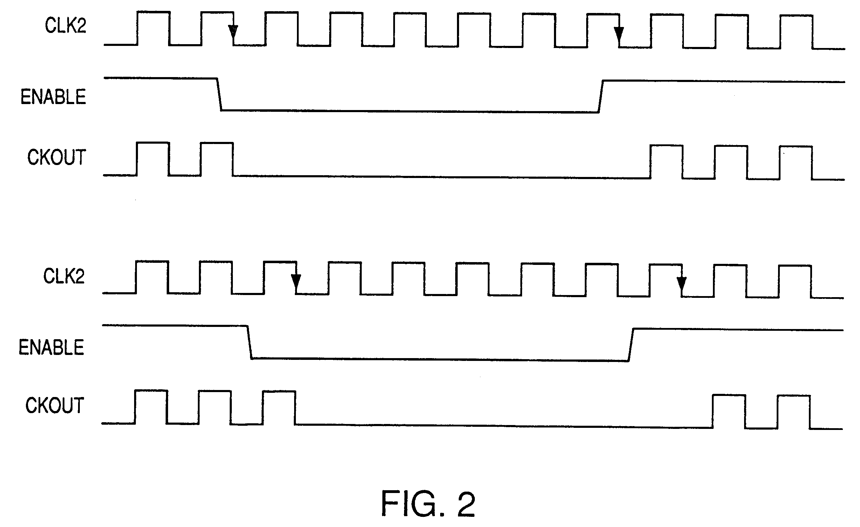

Figure 2 illustrates the waveforms generated by the circuit of Figure 1. In Figure 2, the signal CLK2 is periodic at a selected frequency. When the enable signal goes low, AND gate 18 is prevented from transmitting the clock pulse CLK2 immediately following the next negative-going transition of a clock pulse because inverter 14 converts the negative-going transition of this clock pulse to a positive-going transition on lead 15 which drives or clocks flip-flop 16. Accordingly, with ENABLE low the output signal on lead 17 connected to the Q output of flip-flop 16 will go low and remain low on the next negative-going transition of the clock signal CLK2. This is illustrated in Figure 2. Then, when ENABLE goes high, the next negative-going transition of the clock signal CLK2 will cause the output signal on output lead 17 from flip-flop 16 to go high, thereby again enabling AND gate 18 and allow the transmission of the clock signal.

The operating of the circuitry is shown for the transition of the ENABLE signal from high to low while clock signal CLK2 is high and also for the situation where the ENABLE signal goes low while the clock signal CLK2 is low. Both circumstances show that the signal on output lead 17 connected to the Q output terminal or flip-flop 16 only changes its state on the next negative-going edge of the clock signal CLK2.

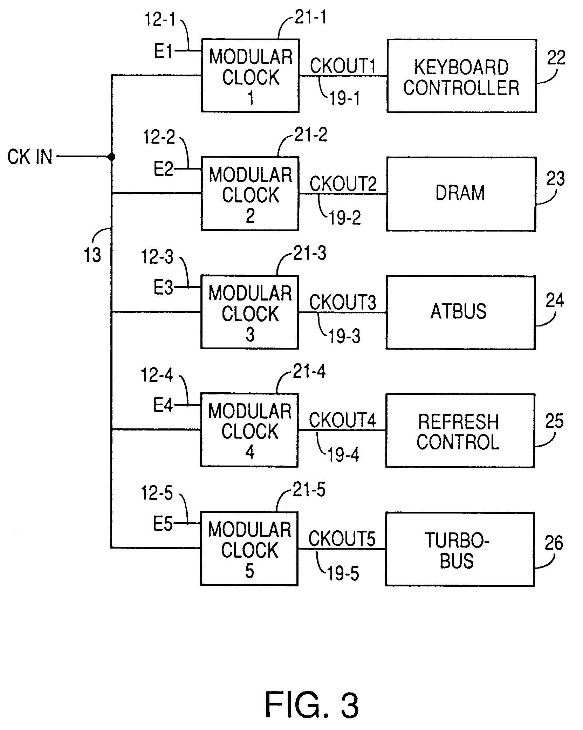

Figure 3 illustrates a system incorporating the modular clocking circuit of Figure 1. In Figure 3, five modular clocking circuits 21-1 through 21-5 are used to control the provision of clocking signals to keyboard controller 22, DRAM 23, AT BUS 24, refresh controller 25 and turbo bus 26, respectively. A common clock signal is provided to each of clocking circuits 21-1 through 21-5 by means of lead 13. Clock signal CK is exactly that signal denoted as CLK2 on lead 13 in the clock circuit of Figure 1.

Each of the clocking circuits 21-1 through 21-5 is selectively enabled to allow the clocking signal on its output leads 19-1 through 19-5 to be transmitted to the corresponding circuitry driven by the clock signal. Thus, for example, clocking circuit 21-2, when enabled, provides a clock signal on lead 19-2 to DRAM 23. When clocking circuit 21-2 is disabled, as described above in conjunction with Figure 1, DRAM 23 receives no clocking signal. The ENABLE signals E1, E2, E3, E4 and E5 applied to clocking circuits 21-1 through 21-5 on leads 12-1 through 12-5, respectively, are generated externally by a controller programmed to provide the proper ENABLE signals in response to the needs of the circuitry and the system.

The above description is meant to be illustrative only, other embodiments of this invention will be obvious to those skilled in the art in view of the above description.

## Claims

1. A clock signal circuit for providing a clock signal to one or more portions of an electronic system and for selectively disabling said clock signal from being provided to said portions of said electronic system, said circuit comprising
means for transmitting a clock signal to said portions of said electronic system; and
means for disabling said means for transmitting to thereby prevent the transmission of said clock signal to said portions of said electronic system.

2. The circuit as in Claim 1 wherein said means for transmitting comprises
a flip-flop capable of producing an output signal having a first and a second state;
means for transmitting said output signal to one input lead of an AND gate thereby to enable or disable said AND gate as required;
a source of a clock signal; and
means for transmitting said clock signal to another input lead of said AND gate, said AND gate transmitting said clock signal to an output lead from said AND gate in response to the signal on said output lead from said flip-flop assuming a first state and said AND gate preventing the transmission of said clock signal to the output lead from said AND gate in response to the signal from said flip-flop assuming a second state.

3. An electronic system including a least one circuit as described in Claim 2.

4. An electronic system including two or more circuits of the type described in Claim 1.
